# FASCICULE DE BREVET EUROPEEN

(11) **EP 4 045 335 B1**
(45) Date de publication et mention de la délivrance du brevet: **28.05.2025**
(21) Numéro de dépôt: 20799783.4
(22) Date de dépôt: 15.10.2020
(51) Int. Cl.: B60C 1/00, B60C 9/00, C08K 3/04, C08K 7/02

(54) **COMPOSITE COMPRENANT DES FIBRES COURTES**
KURZFASERN ENTHALTENDER VERBUNDSTOFF
COMPOSITE COMPRISING SHORT FIBERS

(30) Priorité: 18.10.2019 FR 1911694
(43) Date de publication de la demande: 24.08.2022
(73) Titulaire: COMPAGNIE GENERALE DES ETABLISSEMENTS MICHELIN, 63000 Clermont-Ferrand (FR)
(72) Inventeur: GAVARD-LONCHAY, Odile, 63040 CLERMONT-FERRAND CEDEX 9 (FR); THUILLIEZ, Anne-Lise, 63040 CLERMONT-FERRAND CEDEX 9 (FR)
(74) Mandataire: M.F.P. Michelin
(86) Numéro de dépôt international: PCT/FR2020/051846
(87) Numéro de publication internationale: WO 2021/074539

(56) Documents cités:
- WO-A1-2014/167005
- WO-A1-2019/063915
- WO-A1-2019/122548
- US-A1- 2013 319 589
- DATABASE WPI Week 200249, Derwent World Patents Index; AN 2002-457982, XP002799197

## Description

### Domaine technique de l'invention

La présente invention est relative au domaine des composites, en particulier des composites permettant le renforcement d'articles de caoutchouc, par exemple pour le renforcement de bandages pneumatiques ou non pneumatiques pour véhicules.

### Art antérieur

Les nappes de renforcement des pneumatiques ou d'articles de caoutchouc tels que des bandes transporteuses ou des courroies comprennent habituellement un mélange caoutchoutique, dit mélange de calandrage, et des câbles de renforcement, souvent métalliques et recouverts en surface de laiton.

La fonction d'adhésion impose généralement des formulations spécifiques au mélange de calandrage, notamment la nécessité d'un taux de soufre et d'oxyde de zinc élevé, une faible quantité d'acide stéarique, la présence de sel de cobalt, l'emploi d'accélérateur à phase retard longue. De plus, on attend du mélange de calandrage qu'il présente une rigidité suffisante et induise le moins de pertes hystérétiques possible afin de minimiser la résistance au roulement ou les échauffements des articles de caoutchouc. On voit donc que ce mélange complexe doit remplir plusieurs fonctions, parfois contradictoires.

Pour augmenter la rigidité des compositions de calandrage, de nombreuses voies ont été explorées. On peut par exemple augmenter la quantité de charge renforçante, mais ce levier impacte généralement l'hystérèse des compositions. On peut également augmenter la teneur en soufre, avec le risque de sensibiliser les compositions aux phénomènes de vieillissement, ou bien de diminuer le collant à cru, c'est-à-dire avant réticulation de la composition, ce qui peut rendre plus complexe les opérations de calandrage (« processabilité » de la composition). D'autres leviers sont utilisés, comme l'incorporation de résines renforçantes de type résines formophénoliques couplées à des durcisseurs donneurs de méthylène (typiquement l'hexa-méthylènetétramine (en abrégé HMT), l'hexaméthoxyméthylmélamine (en abrégé HMMM ou H3M), ou l'hexaéthoxyméthylmélamine). Toutefois, la combinaison d'une résine phénolique, accepteur de méthylène avec l'HMT ou l'H3M donneur de méthylène, produit du formaldéhyde au cours de la réticulation de la composition de caoutchouc. Or, il est souhaitable de diminuer, voire de supprimer à terme le formaldéhyde des compositions de caoutchouc en raison de l'impact environnemental potentiel de ces composés.

Le document JPH09279043 propose d'ajuster la rigidité à faible et forte déformation d'un mélange de caoutchouc et/ou de polyoléfines en mettant en œuvre un coupage de fibres, avec d'une part des fibres courtes thermoplastiques de très faible diamètre (0,05 à 5 µm) comprenant des groupes amides, un agent de couplage silane ou un condensat de résine formophénolique permettant l'adhésion de ces fibres à la matrice élastomérique et d'autre part des fibres courtes organiques ou inorganiques. Toutefois, ce document est muet quant aux propriétés hystérétiques des mélanges obtenus.

Poursuivant ses recherches, la demanderesse a découvert un composite à base d'au moins un élément de renfort comprenant une surface métallique et d'une composition de caoutchouc comprenant des fibres courtes permettant d'augmenter de manière significative la rigidité des compositions, sans pénaliser ni leur hystérèse, ni leur processabilité.

### Description détaillée de l'invention

### Définitions

Les composés comprenant du carbone mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Composite

L'invention concerne un composite à base au moins d'un élément de renfort comprenant une surface métallique et d'une composition de caoutchouc.

Par l'expression composite "à base au moins d'un élément de renfort et d'une composition de caoutchouc", il faut entendre un composite comprenant l'élément de renfort et ladite composition, la composition ayant pu réagir avec la surface de l'élément de renfort lors des différentes phases de fabrication du composite, en particulier au cours de la réticulation de la composition ou au cours de la confection du composite avant réticulation de la composition.

Ledit élément de renfort est un élément filaire. Il peut être tout ou partie métallique. Par élément filaire, on entend un élément présentant une longueur au moins 10 fois plus grande que la plus grande dimension de sa section, quelle que soit la forme de cette dernière : circulaire, elliptique, oblongue, polygonale, notamment rectangulaire ou carrée ou ovale. Dans le cas d'une section rectangulaire, l'élément filaire présente la forme d'une bande.

Ledit élément de renfort comprend une surface métallique.

La surface métallique de l'élément de renfort constitue au moins une partie, et préférentiellement la totalité de la surface dudit élément et est destinée à entrer directement au contact de la composition de caoutchouc. De préférence, l'élément de renfort est métallique, c'est-à-dire constitué d'un matériau métallique.

La composition de caoutchouc enrobe au moins une partie de l'élément de renfort, préférentiellement la totalité dudit élément.

Selon une première variante de l'invention, la surface métallique de l'élément de renfort est faite d'un matériau différent du restant de l'élément de renfort. Autrement dit, l'élément de renfort est fait d'un matériau qui est au moins en partie, préférentiellement totalement, recouvert par une couche métallique qui constitue la surface métallique. Le matériau au moins en partie, préférentiellement totalement, recouvert par la surface métallique est de nature métallique ou non métallique, de préférence métallique.

Selon une deuxième variante de l'invention, l'élément de renfort est fait d'un même matériau, auquel cas l'élément de renfort est fait d'un métal qui est identique au métal de la surface métallique.

La surface métallique comprend un métal qui peut être choisi dans le groupe constitué par le fer, le cuivre, le zinc, l'étain, l'aluminium, le cobalt, le nickel et les alliages comportant au moins un de ces métaux. Les alliages peuvent être par exemple des alliages binaires ou ternaires, comme l'acier, le bronze et le laiton. De préférence, la surface métallique comprend un métal choisi dans le groupe constitué par le fer, le cuivre, l'étain, le zinc et un alliage comportant au moins un de ces métaux. De manière plus préférentielle, la surface métallique comprend un métal choisi dans le groupe constitué par l'acier, le laiton (alliage Cu-Zn), le zinc et le bronze (alliage Cu-Sn), et de manière encore plus préférée dans le groupe constitué par le laiton et l'acier. De manière très préférée, la surface métallique est en laiton.

Certains métaux étant sujets à l'oxydation au contact de l'air ambiant, le métal peut être en partie oxydé.

Lorsque la surface métallique est en acier, l'acier est préférentiellement un acier au carbone ou un acier inoxydable. Lorsque l'acier est un acier au carbone, sa teneur en carbone est de préférence comprise entre 0.01% et 1.2% ou entre 0.05% et 1.2%, ou bien encore entre 0.2% et 1.2%, notamment entre 0.4% et 1.1%. Lorsque l'acier est inoxydable, il comporte de préférence au moins 11% de chrome et au moins 50% de fer.

Selon un mode de réalisation préféré, le composite est un produit renforcé qui comprend plusieurs éléments de renforcement tels que définis ci-dessus et une gomme de calandrage dans laquelle sont noyés les éléments de renforcement, la gomme de calandrage consistant en la composition de caoutchouc du composite selon l'invention. Selon ce mode de réalisation, les éléments de renforcement sont agencés généralement côte à côte selon une direction principale. Pour une application envisagée dans un bandage pneumatique, le composite peut donc constituer une armature de renforcement pour bandage pneumatique.

Le composite conforme à l'invention peut être à l'état cru (avant réticulation de la composition de caoutchouc) ou à l'état cuit (après réticulation de la composition de caoutchouc). Le composite est cuit après mise en contact du ou des éléments de renfort avec la composition de caoutchouc selon l'invention.

Le composite peut être fabriqué par un procédé qui comprend les étapes suivantes :
- Réaliser deux couches de la composition de caoutchouc du composite selon l'invention,
- Prendre le ou les éléments de renfort en sandwich dans les deux couches en le(s) déposant entre les deux couches,
- Le cas échéant cuire le composite.

Alternativement, le composite peut être fabriqué en déposant l'élément de renfort sur une portion d'une couche, la couche est alors repliée sur elle-même pour couvrir l'élément de renfort qui est ainsi pris en sandwich sur toute sa longueur ou une partie de sa longueur.

La réalisation des couches peut se faire par calandrage. Au cours de la cuisson du composite, la composition de caoutchouc est réticulée.

Lorsque le composite est destiné à être utilisé en tant qu'armature de renforcement dans un bandage pneumatique, la cuisson du composite a lieu généralement lors de la cuisson de l'enveloppe du bandage pneumatique.

### Élastomères diéniques

Le composite selon l'invention comprend une composition de caoutchouc à base d'au moins un élastomère diénique. Par élastomère du type diénique, on rappelle que doit être entendu un élastomère qui est issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Les élastomères diéniques compris dans la composition selon l'invention sont préférentiellement essentiellement insaturés.

On entend particulièrement par élastomère diénique susceptible d'être utilisé dans les compositions conformes à l'invention :
a) tout homopolymère d'un monomère diène conjugué ou non ayant de 4 à 18 atomes de carbone ;
b) tout copolymère d'un diène, conjugué ou non, ayant de 4 à 18 atomes de carbone et d'au moins un autre monomère.

L'autre monomère peut être l'éthylène, une oléfine ou un diène, conjugué ou non.

À titre de diènes conjugués conviennent les diènes conjugués ayant de 4 à 12 atomes de carbone, en particulier les 1,3-diènes, tels que notamment le 1,3-butadiène et l'isoprène.

À titre d'oléfines conviennent les composés vinylaromatiques ayant de 8 à 20 atomes de carbone et les α-monooléfines aliphatiques ayant de 3 à 12 atomes de carbone.

À titre de composés vinylaromatiques conviennent par exemple le styrène, l'ortho-, méta-, para-méthylstyrène, le mélange commercial "vinyle-toluène", le para-tertiobutylstyrène.

À titre d'α-monooléfines aliphatiques conviennent notamment les α-monooléfines aliphatiques acycliques ayant de 3 à 18 atomes de carbone.

L'élastomère diénique est de préférence un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères d'éthylène-butadiène (EBR) et les mélanges de tels copolymères.

Les élastomères diéniques ci-dessus peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation, par exemple époxydés.

De manière préférée, la composition de caoutchouc du composite selon l'invention comprend au moins 50 pce, préférentiellement au moins 70 pce, de manière préférée au moins 90 pce d'au moins un élastomère isoprénique.

### Charge renforçante

On peut utiliser tout type de charge renforçante connue pour ses capacités à renforcer une composition de caoutchouc utilisable pour la fabrication de bandages pneumatiques, par exemple une charge organique telle que du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone renforçant des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0,1 à 0,3].

Par "charge inorganique renforçante", doit être entendu dans la présente demande, par définition, toute charge inorganique ou minérale (quelle que soit sa couleur et son origine naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles.

La charge inorganique renforçante utilisée, en particulier s'il s'agit de silice, a de préférence une surface BET comprise entre 45 et 400 m²/g, plus préférentiellement comprise entre 60 et 300 m²/g.

De manière préférentielle, la composition de caoutchouc du composite selon l'invention comprend de 10 à 100 pce, plus préférentiellement de 10 à 80 pce et de manière préférée de 10 à 60 pce de noir de carbone, l'optimum étant de manière connue différent selon les applications particulières visées : le niveau de renforcement attendu sur un bandage pneumatique vélo, par exemple, est bien sûr inférieur à celui exigé sur un bandage pneumatique apte à rouler à grande vitesse de manière soutenue, par exemple un pneu moto, un pneu pour véhicule de tourisme ou pour véhicule utilitaire tel que Poids lourd. Dans un arrangement préféré, la charge renforçante est constituée de noir de carbone.

De manière préférentielle, la composition de caoutchouc du composite selon l'invention comprend de 10 à 150 pce, de préférence de 10 à 100 pce de silice. Dans un arrangement préféré, la charge renforçante est constituée de silice.

De préférence, la composition de caoutchouc du composite selon l'invention ne comprend pas d'agents de couplage de la famille des silanes ou en comprend moins de 5 pce, de préférence moins de 3 pce, de manière préférée moins de 2 pce, de manière très préférée moins de 1 pce, préférentiellement moins de 0,5 pce. Par composition ne comprenant pas un composé, on comprend que la composition ne comprend pas de ce composé introduit volontairement dans la composition et que ce composé, s'il est présent, l'est sous forme de traces liées par exemple au procédé de fabrication de la composition ou des éléments la composant.

L'homme du métier comprendra qu'à titre de charge équivalente de la charge inorganique renforçante décrite dans le présent paragraphe, pourrait être utilisée une charge renforçante d'une autre nature, notamment organique, dès lors que cette charge renforçante serait recouverte d'une couche inorganique telle que silice, ou bien comporterait à sa surface des sites fonctionnels, notamment hydroxyles, permettant d'établir la liaison entre la charge et l'élastomère en présence ou non d'un agent de recouvrement ou de couplage.

### Système de réticulation

La composition de caoutchouc du composite selon l'invention comprend un système de réticulation. De manière préférentielle, le système de réticulation est à base de soufre, on parle alors d'un système de vulcanisation. Le soufre peut être apporté sous toute forme, notamment sous forme de soufre moléculaire, ou d'un agent donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

De préférence, la composition de caoutchouc du composite selon l'invention comprend au moins 2 pce d'oxyde de zinc, préférentiellement au moins 3 pce et de manière préférée au moins 5 pce d'oxyde de zinc.

Le soufre est utilisé à un taux préférentiel compris entre 2,5 et 10 pce, en particulier entre 3 et 8 pce. L'accélérateur de vulcanisation est utilisé à un taux préférentiel compris dans un domaine allant de 0,4 à 4 pce, de préférence allant de 0,5 à 3,5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

### Additifs divers

La composition de caoutchouc du composite selon l'invention peut également comprendre tout ou partie des additifs usuels habituellement utilisés dans les compositions d'élastomères destinées à la fabrication de bandages pneumatiques, comme par exemple des plastifiants ou des huiles d'extension, que ces derniers soient de nature aromatique ou non-aromatique, des pigments, des agents de protection tels que cires anti-ozone, anti-ozonants chimiques, antioxydants, des agents anti-fatigue, des résines renforçantes telles que des bismaleimides, des accepteurs (par exemple résine phénolique novolaque) ou des donneurs de méthylène (par exemple HMT ou H3M).

De manière préférée, la composition de caoutchouc du composite selon l'invention ne comprend pas de résine renforçante ou en comprend moins de 10 pce, préférentiellement moins de 5 pce, de manière préférée moins de 2 pce, préférentiellement moins de 1 pce et de manière très préférée moins de 0,2 pce.

Par résine renforçante, on entend une résine connue de l'homme du métier pour rigidifier des compositions de caoutchouc, rigidité mesurée par exemple par le Module de Young, selon la norme ASTM 412-98a, ou le module complexe de cisaillement dynamique G* selon la norme ASTM D 5992-96.

### Fibres

Le composite selon l'invention comprend une composition de caoutchouc comprenant des fibres ayant une longueur comprise entre 1 et 20 mm, de préférence comprise entre 1 et 12 mm, et de manière préférée comprise entre 5 et 10 mm et un diamètre compris entre 10 µm et 100 µm, de manière préférée compris entre 10 et 50 µm.

Des fibres plus longues diminuent la processabilité des compositions de caoutchouc en augmentant leur viscosité Mooney à cru tandis que des fibres trop courtes n'ont pas l'effet renforçant attendu. Il est apparu que des fibres présentant une longueur comprise entre 1 et 20 mm et un diamètre compris entre 10 µm et 100 µm permettent d'augmenter la rigidité des compositions de caoutchouc en maintenant, voire abaissant l'hystérèse, tout en préservant une excellente processabilité. Des fibres d'un diamètre plus étroit n'ont pas totalement l'effet renforçant attendu, du fait sans doute d'une plus grande fragilité de la fibre.

Ces fibres présentes dans la composition de caoutchouc sont préférentiellement à base d'un matériau choisi parmi les aramides, les alcools polyvinyliques et leurs mélanges, préférentiellement parmi les para-aramides, l'alcool polyvinylique et leurs mélanges. Très préférentiellement, ces fibres sont à base d'alcool polyvinylique.

De manière préférée, ces fibres sont à base ou bien d'un matériau choisi parmi les aramides, ou bien d'un matériau choisi parmi les alcools polyvinyliques. En d'autres termes, selon cette préférence, ces fibres sont soit à base d'un matériau aramide soit à base d'un matériau à base d'alcool polyvinylique. C'est-à-dire que la composition selon cette préférence ne contient qu'une seule nature de fibre et non un mélange de fibres à base d'un matériau aramide et de fibres à base d'un matériau à base d'alcool polyvinylique.

De préférence, la composition de caoutchouc du composite selon l'invention ne comprend pas de fibres constituées d'un matériau choisi parmi les aramides, ou en comprend moins de 1 pce.

De manière préférée, ces fibres sont revêtues d'une composition adhésive permettant d'améliorer leur adhésion à la composition de caoutchouc.

Cette composition adhésive peut être une colle Résorcinol-formaldéhyde-latex classique, couramment abrégée colle RFL, ou bien encore une composition adhésive à base d'une résine phénol-aldéhyde et d'un latex telle que décrite dans les documents WO 2013/017421, WO 2013/017422, WO 2013/017423, WO 2015/007641 et WO 2015/007642. L'utilisation de compositions adhésives à base d'une résine phénol-aldéhyde et d'un latex est particulièrement avantageuse du fait de la non-émission de formaldéhyde.

De manière préférée, la composition de caoutchouc du composite selon l'invention comprend de 5 à 30 pce desdites fibres, de préférence de 5 à 20 pce desdites fibres. Ces teneurs permettent d'assurer un bon décalage du compromis rigidité/hystérèse tout en maintenant une bonne processabilité des compositions à cru. De manière préférée, la composition selon l'invention comprend de 5 à 30 pce de fibres au total, de préférence de 5 à 20 pce de fibres au total. De manière très préférée, la composition selon l'invention ne comprend pas d'autres fibres que lesdites fibres.

De telles fibres utiles aux besoins de l'invention peuvent par exemple être les fibres « Twaron » commercialisées par la société Teijin, ou les fibres « Kuralon » commercialisées par la société Kuraray.

### Article fini ou semi-fini et pneumatique

L'invention a également pour objet un article fini ou semi-fini comprenant un composite selon l'invention. L'article fini ou semi-fini peut être tout article comprenant un composite. On peut citer par exemple et de manière non limitative les bandes transporteuses, bandages pneumatiques ou non pneumatiques.

Le bandage pneumatique, autre objet de l'invention, a pour caractéristique essentielle de comprendre le composite conforme à l'invention. Le bandage pneumatique peut être à l'état cru (avant réticulation de la composition de caoutchouc) ou à l'état cuit (après réticulation de la composition de caoutchouc). Généralement, au cours de la fabrication du bandage pneumatique, le composite est déposé à l'état cru (c'est-à-dire avant réticulation de la composition de caoutchouc) dans la structure du bandage pneumatique avant l'étape de cuisson du bandage pneumatique.

L'invention concerne particulièrement des bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd », c'est-à-dire métro, bus, engins de transport routier (camions, tracteurs, remorques), véhicules hors-la-route tels qu'engins agricoles ou de génie civil, et autres.

### Exemples

### Méthodes de mesure

La mesure de plasticité Mooney se fait selon le principe suivant et conformément à la norme ASTM D-1646. La composition ou l'élastomère, généralement cru, est moulé dans une enceinte cylindrique chauffée à une température donnée, usuellement 100°C. Après une minute de préchauffage, un rotor de type L tourne au sein de l'éprouvette à 2 tours par minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

Les essais en traction ont été effectués conformément à la norme française NF T 46-002 de septembre 1988. Toutes les mesures de traction ont été effectuées dans les conditions normales de température (23±2°C) et d'hygrométrie (50±5% d'humidité relative), selon la norme française NF T 40-101 (décembre 1979).

On a mesuré en seconde élongation (c'est-à-dire après accommodation) le module sécant nominal calculé en se ramenant à la section initiale de l'éprouvette (ou contrainte apparente, en MPa) à 10% d'allongement noté MA₁₀, sur des échantillons cuits 25 minutes à 150°C.

Les propriétés dynamiques tan(d)max à 60°C sont mesurées sur un viscoanalyseur (Metravib VA4000), selon la norme ASTM D 5992-96. On enregistre la réponse d'un échantillon de composition réticulée (éprouvette cylindrique de 4 mm d'épaisseur et de 400 mm² de section), soumis à une sollicitation sinusoïdale en cisaillement simple alterné, à la fréquence de 10Hz, dans les conditions définies de température par exemple à 40°C selon la norme ASTM D 1349-99, ou selon les cas à une température différente. On effectue un balayage en amplitude de déformation de 0,1 à 50% (cycle aller), puis de 50% à 0,1% (cycle retour). Les résultats exploités sont le facteur de perte tan(d). Pour le cycle retour, on indique la valeur maximale de tan(d) observée, noté tan(d)max, à 60°C. Cette valeur est exprimée en base 100 en prenant pour référence la composition C02.

On rappelle que, de manière bien connue de l'homme du métier, la valeur de tan(d)max à 60°C est représentative de l'hystérèse du matériau, donc de la résistance au roulement : plus tan(d)max à 60°C est faible, plus la résistance au roulement est réduite et donc améliorée. Ainsi, une valeur plus faible que 100 indiquera une résistance au roulement réduite par rapport à la composition C02 et une valeur plus élevée que 100 indiquera une résistance au roulement augmentée par rapport à C02.

### Préparation des compositions

On procède pour les essais qui suivent de la manière suivante : on introduit dans un mélangeur interne (taux de remplissage final : environ 70% en volume), dont la température initiale de cuve est d'environ 60 °C, successivement, l'élastomère diénique, la charge renforçante ainsi que les divers autres ingrédients, dont les fibres et, le cas échéant, les résines formophénoliques, à l'exception du système de vulcanisation. On conduit alors un travail thermomécanique (phase non-productive) en une étape, qui dure au total environ 3 à 4 min, jusqu'à atteindre une température maximale de « tombée » de 165°C.

On récupère le mélange ainsi obtenu, on le refroidit puis on incorpore du soufre et un accélérateur (sulfénamide) et, le cas échéant, les durcisseurs de résines formophénoliques, sur un mélangeur (homo-finisseur) à 30 °C, en mélangeant le tout (phase productive) pendant un temps approprié (par exemple entre 5 et 12 min).

Les compositions ainsi obtenues sont ensuite calandrées sous la forme de plaques (épaisseur de 2 à 3 mm) ou de feuilles fines de caoutchouc puis sont soumises à une étape de cuisson à 150°C pendant 25 min avant la mesure de leurs propriétés physiques ou mécaniques.

On mesure pour chaque composition à cru, c'est-à-dire avant vulcanisation, la valeur de plasticité Mooney exprimée en UM (unité Mooney). On mesure ensuite à cuit, donc après vulcanisation, le module d'élasticité sous tension à 10% d'allongement (MA₁₀) et la valeur de tan(d)ₘₐₓ.

Des essais ont été réalisés avec différentes compositions de caoutchouc présentées au tableau 1, à base de caoutchouc naturel. La composition C01 correspond à une composition classique de calandrage. La composition C02 ne diffère de la composition C01 que par la teneur en noir de carbone, plus faible. Cette composition est donc moins hystérétique que la composition classique C01. La composition FP1 est une composition similaire à la composition C01 dont on a augmenté la rigidité de manière connue de l'Homme du métier en ajoutant une résine formophénolique. Les compositions C03 à C08 comprennent des fibres courtes.

**[Tableau 1]**

| | ***C01*** | ***C02*** | ***FP1*** | ***C03*** | ***C04*** | ***C05*** | ***C06*** | ***C07*** | ***C08*** |
|---|---|---|---|---|---|---|---|---|---|
| Caoutchouc naturel (1) | 100 | 100 | 100 | 100 | 100 | 100 | 100 | 100 | 100 |
| Noir de carbone (2) | 70 | 40 | 70 | 40 | 40 | 40 | 40 | 40 | 40 |
| Oxyde de zinc (3) | 8 | 8 | 8 | 8 | 8 | 8 | 8 | 8 | 8 |
| Acide stéarique (4) | 0.6 | 0.6 | 0.6 | 0.6 | 0.6 | 0.6 | 0.6 | 0.6 | 0.6 |
| 6PPD (5) | 2 | 2 | 2 | 2 | 2 | 2 | 2 | 2 | 2 |
| CTP (6) | 0.2 | 0.2 | 0.2 | 0.2 | 0.2 | 0.2 | 0.2 | 0.2 | 0.2 |
| Sel de Cobalt | 1 | 1 | 1 | 1 | 1 | 1 | 1 | 1 | 1 |
| Soufre | 5 | 5 | 5 | 5 | 5 | 5 | 5 | 5 | 5 |
| TBBS (7) | 0.7 | 0.7 | 1 | 0.7 | 0.7 | 0.7 | 0.7 | 0.7 | 0.7 |
| Résine formophénolique (8) | - | - | 10 | - | - | - | - | - | - |
| Durcisseur (9) | - | - | 8 | - | - | - | - | - | - |
| Fibres aramide, longueur 6 mm (10) | - | - | - | 10 | 20 | - | - | - | - |
| Fibres PVA, longueur 6 mm (11) | - | - | - | - | - | 10 | 20 | - | - |
| Fibres PVA, longueur 10 mm (11) | - | - | - | - | - | - | - | 10 | 20 |

| Propriétés à cru | | | | | | | | | |
|---|---|---|---|---|---|---|---|---|---|
| Plasticité Mooney (1+4) (UM) | 84 | 60 | | 70 | 85 | 67 | 73 | 70 | 78 |

| Propriétés à cuit | | | | | | | | | |
|---|---|---|---|---|---|---|---|---|---|
| MA10 | 190 | 100 | 1310 | 1133 | 1743 | 1976 | 3164 | 2610 | 2560 |
| Tan(delta)max retour (60°C) | 240 | 100 | 340 | 120 | 130 | 110 | 120 | 120 | 140 |
| Compromis Rigidité/hystérèse | 0.6 | - | 5.0 | 51.7 | 54.8 | 187.6 | 153.2 | 125.5 | 61.5 |

| | | | | | | | | | |
|---|---|---|---|---|---|---|---|---|---|
| Quantités exprimées en pce (1) Caoutchouc naturel (peptisé) (2) Grade ASTM N326 (société Cabot) (3) Oxyde de zinc de grade industriel (société Umicore) (4) Stéarine « Pristerene 4931 » (société Uniqema) (5) N-(1,3-diméthylbutyl)-N'-phényl-p-phénylènediamine (Santoflex 6-PPD, société Flexsys) (6) N-(cyclohexylthio)phtalimide « Vulkalent G » (société Lanxess) ou aussi « Duslin P » (société Duslo) (7) N-tert-butyl-2-benzothiazol-sulfénamide « Santocure » (société Flexsys) (8) Résine précondensée SRF 1524 (de la société Schenectady ; diluée à 75%) (9) Hexa-méthylènetétramine (de la société Sigma-Aldrich ; de pureté ≥ 99%) (10) Fibres para-aramides « Twaron 1080 », commercialisées par la société Teijin, de longueur 6 mm et de diamètre 15 µm (11) Fibres alcool polyvinylique « Kuralon » commercialisées par la société Kuraray, diamètre 27 µm | | | | | | | | | |

D'un point de vue processabilité, on observe que toutes les compositions comprenant des fibres présentent des valeurs de viscosité Mooney proches ou inférieures à celle de la composition classique C01, ce qui montre une bonne processabilité de ces compositions.

La composition rigide FP1 présente, comme attendu, une bien plus forte rigidité que les compositions C01 et C02, avec une perte hystérétique supérieure à la composition C01.

De manière surprenante, on observe que les compositions C03 à C08 présentent des rigidités similaires, voire supérieures à la composition FP1, tout en présentant des pertes hystérétiques proches de la composition faiblement chargée C02.

Ce décalage du compromis rigidité/hystérèse est reflété par l'indicateur éponyme calculé comme suit :
Compromis rigidité/hystérèse=(rigidité_{composition}-rigidité_{référence})/rigidité_{référence} / ((hystérèse_{composition}-hystérèse_{référence})/hystérèse_{référence})

## Revendications

1. Composite à base d'au moins un élément de renfort comprenant une surface métallique et d'une composition de caoutchouc à base d'au moins un élastomère diénique, une charge renforçante, un système de réticulation et des fibres ayant une longueur comprise entre 1 et 20 mm et un diamètre compris entre 10 µm et 100 µm.

2. Composite selon la revendication 1 dans lequel lesdites fibres sont à base d'un matériau choisi parmi les aramides, les alcools polyvinyliques et leurs mélanges, préférentiellement parmi les para-aramides, l'alcool polyvinylique et leurs mélanges et très préférentiellement l'alcool polyvinylique.

3. Composite selon la revendication précédente dans lequel lesdites fibres sont à base ou bien d'un matériau choisi parmi les aramides, ou bien d'un matériau choisi parmi les alcools polyvinyliques.

4. Composite selon l'une quelconque des revendications précédentes dans lequel lesdites fibres ont une longueur comprise entre 1 et 12 mm, de préférence comprise entre 5 et 10 mm.

5. Composite selon l'une quelconque des revendications précédentes dans lequel lesdites fibres sont revêtues d'une composition adhésive.

6. Composite selon l'une quelconque des revendications précédentes dans lequel la composition de caoutchouc comprend de 5 à 30 pce desdites fibres, de préférence de 5 à 20 pce desdites fibres.

7. Composite selon l'une quelconque des revendications précédentes dans lequel la charge renforçante de la composition de caoutchouc comprend du noir de carbone, de la silice ou un mélange de noir de carbone et de silice.

8. Composite selon l'une quelconque des revendications précédentes dans lequel la composition de caoutchouc ne comprend pas d'agents de couplage de la famille des silanes ou en comprend moins de 5 pce, de préférence moins de 3 pce, de manière préférée moins de 2 pce, de manière très préférée moins de 1 pce, préférentiellement moins de 0,5 pce.

9. Composite selon l'une quelconque des revendications précédentes dans lequel la composition de caoutchouc comprend au moins 0,5 pce, préférentiellement au moins 1 pce de sels de cobalt.

10. Composite selon l'une quelconque des revendications précédentes dans lequel la composition de caoutchouc comprend un élastomère diénique choisi dans le groupe constitué par les polybutadiènes, le caoutchouc naturel, les polyisoprènes de synthèse, les copolymères de butadiène, les copolymères d'isoprène, les copolymères d'éthylène-butadiène, et les mélanges de ces élastomères.

11. Composite selon l'une quelconque des revendications précédentes dans lequel la composition de caoutchouc comprend au moins 50 pce, préférentiellement au moins 70 pce, de manière préférée au moins 90 pce d'au moins un élastomère isoprénique.

12. Composite selon la revendication précédente dans lequel l'élastomère isoprénique est choisi dans le groupe constitué par le caoutchouc naturel, les polyisoprènes de synthèse, les copolymères d'isoprène et leurs mélanges.

13. Composite selon l'une quelconque des revendications précédentes dans lequel le métal de la surface métallique est le fer, le cuivre, l'étain, le zinc ou un alliage comportant au moins un de ces métaux.

14. Article de caoutchouc comprenant un composite selon l'une quelconque des revendications 1 à 13.

15. Bandage pneumatique comprenant un composite selon l'une des revendications 1 à 13.

## Patentansprüche

1. Verbundstoff auf Basis mindestens eines Verstärkungselements, das eine Metalloberfläche umfasst, und einer Kautschukzusammensetzung auf Basis mindestens eines Dienelastomers, eines verstärkenden Füllstoffs, eines Vernetzungssystems und von Fasern mit einer Länge zwischen 1 und 20 mm und einem Durchmesser zwischen 10 µm und 100 µm.

2. Verbundstoff nach Anspruch 1, wobei die Fasern auf Basis eines Materials sind, das aus den Aramiden, den Polyvinylalkoholen und ihren Mischungen, vorzugsweise aus den para-Aramiden, dem Polyvinylalkohol und ihren Mischungen und sehr vorzugsweise dem Polyvinylalkohol ausgewählt ist.

3. Verbundstoff nach dem vorhergehenden Anspruch, wobei die Fasern auf Basis eines Materials oder aber aus einem Material sind, das aus den Aramiden ausgewählt ist, oder aber aus einem Material, das aus den Polyvinylalkoholen ausgewählt ist.

4. Verbundstoff nach einem der vorhergehenden Ansprüche, wobei die Fasern eine Länge zwischen 1 und 12 mm, bevorzugt zwischen 5 und 10 mm haben.

5. Verbundstoff nach einem der vorhergehenden Ansprüche, wobei die Fasern mit einer haftenden Zusammensetzung überzogen sind.

6. Verbundstoff nach einem der vorhergehenden Ansprüche, wobei die Kautschukzusammensetzung 5 bis 30 phr der Fasern, bevorzugt 5 bis 20 phr der Fasern umfasst.

7. Verbundstoff nach einem der vorhergehenden Ansprüche, wobei der verstärkende Füllstoff der Kautschukzusammensetzung Ruß, Siliciumdioxid oder eine Mischung aus Ruß und aus Siliciumdioxid umfasst.

8. Verbundstoff nach einem der vorhergehenden Ansprüche, wobei die Kautschukzusammensetzung keine Kopplungsmittel aus der Familie der Silane umfasst oder weniger als 5 phr, bevorzugt weniger als 3 phr, besonders bevorzugt weniger als 2 phr, ganz besonders bevorzugt weniger als 1 phr, vorzugsweise weniger als 0,5 phr davon umfasst.

9. Verbundstoff nach einem der vorhergehenden Ansprüche, wobei die Kautschukzusammensetzung mindestens 0,5 phr, vorzugsweise mindestens 1 phr Kobaltsalze umfasst.

10. Verbundstoff nach einem der vorhergehenden Ansprüche, wobei die Kautschukzusammensetzung ein Dienelastomer umfasst, das aus der Gruppe ausgewählt ist, die aus den Polybutadienen, dem Naturkautschuk, den synthetischen Polyisoprenen, den Butadien-Copolymeren, den Isopren-Copolymeren, den Ethylen-Butadien-Copolymeren und den Mischungen dieser Elastomere besteht.

11. Verbundstoff nach einem der vorhergehenden Ansprüche, wobei die Kautschukzusammensetzung mindestens 50 phr, vorzugsweise mindestens 70 phr, besonders bevorzugt mindestens 90 phr mindestens eines Isoprenelastomers umfasst.

12. Verbundstoff nach dem vorhergehenden Anspruch, wobei das Isoprenelastomer aus der Gruppe ausgewählt ist, die aus Naturkautschuk, den synthetischen Polyisoprenen, den Isopren-Copolymeren und ihren Mischungen besteht.

13. Verbundstoff nach einem der vorhergehenden Ansprüche, wobei das Metall der Metalloberfläche Eisen, Kupfer, Zinn, Zink oder eine mindestens eines dieser Metalle beinhaltende Legierung ist.

14. Kautschukartikel, der einen Verbundstoff nach einem der Ansprüche 1 bis 13 umfasst.

15. Luftreifen, der einen Verbundstoff nach einem der Ansprüche 1 bis 13 umfasst.

## Claims

1. Composite based on at least one reinforcing element comprising a metallic surface and on a rubber composition based on at least one diene elastomer, a reinforcing filler, a crosslinking system and fibres having a length of between 1 and 20 mm and a diameter of between 10 µm and 100 µm.

2. Composite according to Claim 1, in which said fibres are based on a material selected from aramids, polyvinyl alcohols and mixtures thereof, preferentially from para-aramids, polyvinyl alcohol and mixtures thereof, and very preferentially polyvinyl alcohol.

3. Composite according to the preceding claim, in which said fibres are based on or else of a material selected from aramids, or else on or of a material selected from polyvinyl alcohols.

4. Composite according to any one of the preceding claims, in which said fibres have a length of between a and 12 mm and preferably between 5 and 10 mm.

5. Composite according to any one of the preceding claims, in which said fibres are coated with an adhesive composition.

6. Composite according to any one of the preceding claims, in which the rubber composition comprises from 5 to 30 phr of fibres, preferably from 5 to 20 phr of said fibres.

7. Composite according to any one of the preceding claims, in which the reinforcing filler of the rubber composition comprises carbon black, silica or a mixture of carbon black and silica.

8. Composite according to any one of the preceding claims, in which the rubber composition does not comprise coupling agents of the silane family, or comprises less than 5 phr, preferably less than 3 phr, preferably less than 2 phr, very preferably less than 1 phr, preferentially less than 0.5 phr, thereof.

9. Composite according to any one of the preceding claims, in which the rubber composition comprises at least 0.5 phr, preferentially at least 1 phr of cobalt salts.

10. Composite according to any one of the preceding claims, in which the rubber composition comprises a diene elastomer selected from the group consisting of polybutadienes, natural rubber, synthetic polyisoprenes, butadiene copolymers, isoprene copolymers, ethylene/butadiene copolymers, and mixtures of these elastomers.

11. Composite according to any one of the preceding claims, in which the rubber composition comprises at least 50 phr, preferentially at least 70 phr, preferably at least 90 phr of a at least one isoprene elastomer.

12. Composite according to the preceding claim, in which the isoprene elastomer is selected from the group consisting of natural rubber, synthetic polyisoprenes, isoprene copolymers and mixtures thereof.

13. Composite according to any one of the preceding claims, in which the metal of the metallic surface is iron, copper, tin, zinc or an alloy comprising at least one of these metals.

14. Rubber article comprising a composite according to any one of Claims 1 to 13.

15. Pneumatic tyre comprising a composite according to one of Claims 1 to 13.
